Europäisches Patentamt

European Patent Office

Office européen des brevets

(11) Veröffentlichungsnummer: **0 317 783**
**A2**

## (12) EUROPÄISCHE PATENTANMELDUNG

(21) Anmeldenummer: 88117903.0

(22) Anmeldetag: 27.10.88

(51) Int. Cl.⁴: **H02M 7/06**

(30) Priorität: 27.11.87 DE 3740297

(43) Veröffentlichungstag der Anmeldung:
**31.05.89 Patentblatt 89/22**

(84) Benannte Vertragsstaaten:
**AT BE CH DE ES FR GB IT LI NL SE**

(71) Anmelder: **Braun Aktiengesellschaft**
**Rüsselsheimer Strasse 22**
**D-6000 Frankfurt/Main(DE)**

(72) Erfinder: **Schwarz, Gerhard**
**Eggestrasse 16**
**D-5990 Altena 1(DE)**

(54) **Stromversorgungsgerät.**

(57) Zur Versorgung eines Gleichstromverbrauchers (M) kleiner bis mittlerer Leistung aus einer Wechselspannungsquelle (Ue) werden der Wechselspannungsquelle zwei Kondensatoren (C1, C2) parallel geschaltet. Der Verbraucher (M) liegt über eine Gleichrichtungseinrichtung (G1) dem einen Kondensator (C2) parallel.

FIG.1

## Stromversorgungsgerät

Die Erfindung betrifft eine Stromversorgungseinrichtung mit einer Gleichrichtungseinrichtung für einen Verbraucher kleiner bis mittlerer Leistung aus einer Wechselspannungsquelle.

Zur Versorgung von Gleichstromverbrauchern kleiner bis mittlerer Leistung aus einem Wechselspannungsnetz sind verschiedene Möglichkeiten bekannt. Die einfachste und kostengünstigste Version ist beispielsweise ein Gleichrichter und ein ohmscher Spannungsteiler, der entsprechend der Spannung, die der Verbraucher benötigt, angepaßt ist. Nachteilig ist hier vor allem die große Wärmeentwicklung der Widerstände.

Weitere Möglichkeiten sind Wandlernetzteile oder Längsregler. Solche Stromversorgungseinrichtungen haben zwar nicht den Nachteil der großen Wärmeentwicklung wie ein ohmscher Spannungsteiler, sind aber, vor allem für Verbraucher kleiner und mittlerer Leistung der Konsumgüterindustrie, die kostengünstig und einfach aufgebaut sein sollen, zu aufwendig oder haben einen zu großen Platzbedarf, wie beispielsweise der Transformator bei einem Wandlernetzteil.

Aufgabe der Erfindung ist es deshalb, eine Stromversorgungseinrichtung zu schaffen, die kostengünstig ist, wenig Platz benötigt und trotzdem eine geringe Verlustleistung aufweist.

Diese Aufgabe wird dadurch gelöst, daß bei einem Stromversorgungsgerät der eingangs genannten Art zwischen den beiden Polen der Wechselspannungsquelle die Serienschaltung zweier Kondensatoren angeordnet ist und daß parallel zu dem einen Kondensator über die aus einer Gleichrichterbrücke in Gratzschaltung bestehende Gleichrichtungseinrichtung der Verbraucher angeschlossen ist.

Diese Anordnung hat den Vorteil, daß die Ausgangsspannung für unterschiedliche Belastungen stabilisiert wird, daß sie kostengünstig ist und nur eine sehr geringe Verlustleistung aufweist.

In vorteilhafter Weise wird das Verhältnis der Kapazitäten der beiden Kondensatoren so gewählt, daß die vorgegebene, am Verbraucher anliegende Spannung in etwa, d.h. ohne weitere Maßnahmen im zulässigen Toleranzbereich, durch das entsprechende Wechselstromwiderstandsverhältnis der beiden Kondensatoren erzeugt wird.

Werden beispielsweise die Kapazitäten der beiden Kondensatoren gleich groß gewählt, kann ein sogenannter 110 Volt Gleichstrommotor, der ein kleines Haushaltsgerät, wie beispielsweise einen Rasierer, antreibt, auf einfache Art und Weise aus einem 220/240 Volt Wechselstromnetz versorgt werden.

Die Kapazitäten der Kondensatoren werden in vorteilhafter Weise so gewählt, daß bei angeschaltetem Verbraucher der Wirkstrom bei Nennbelastung durch den Verbraucher etwa ein Drittel oder etwas kleiner als der Blindstrom durch den Kondensator ist, der dem Verbraucher und dem vorgeschalteten Gleichrichter parallel liegt.

Diese Dimensionierung stellt einen guten Kompromiß zwischen Kondensatorgröße und Spannungsabfall am Verbraucher bei größerer Belastung dar.

Ein weiterer Vorteil der erfindungsgemäßen Lösung liegt darin, daß bei gleicher Dimensionierung der beiden Kondensatoren auf einfache Art und Weise eine Umschaltung von einem 220/240 Volt Netz auf ein 110/120 Volt Netz möglich ist. Hierzu braucht dem anderen Kondensator, der dem zum Verbraucher parallel geschalteten Kondensator vorgeschaltet ist, lediglich ein Schalter parallel geschaltet werden, der hier bei Betrieb an einem 110/120 Volt Netz geschlossen wird.

Im folgenden werden ein Ausführungsbeispiel und weitere Vorteile der Erfindung anhand der Figuren 1 bis 3 näher erläutert:

Es zeigt:

Fig. 1 Ein Ausführungsbeispiel mit einer Graetzschaltung als Gleichrichter und einem Gleichstrommotor als Verbraucher;

Fig. 2 ein Diagramm über die Abhängigkeit des Wirkstromes Ia des Gleichstrommotors M der Schaltung nach Fig. 1 vom Blindstrom I2 durch den Kondensator C2 für verschiedene Belastungen (Drehmoment Md) des Motors bei einer Kapazität von 1,5 uF der Kondensatoren;

Fig. 3 einen Vergleich der Abhängigkeit der am Verbraucher anliegenden Spannung Ua von der Belastung (Drehmoment Md) für die Schaltungsanordnung nach Fig. 1 mit kapazitiven Spannungsteiler (Kurve 1) und für eine Anordnung mit einem ohmschen Spannungsteiler nach dem Stand der Technik (Kurve 2).

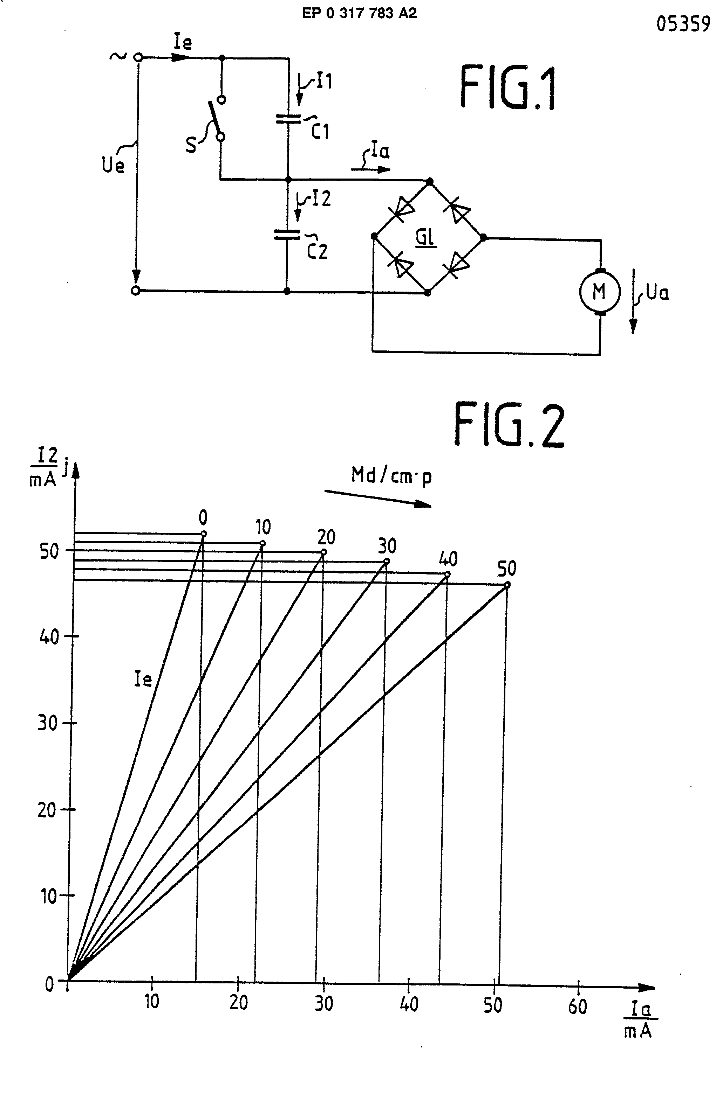

In Fig. 1 ist der Wechselspannungsquelle Ue, beispielsweise ein 220/240 Volt Netz, die Serienschaltung der Kondensatoren C1 und C2 parallel geschaltet. Dem Kondensator C2 ist über eine Gleichrichterbrücke G1 ein Gleichstrommotor M parallel geschaltet, an dem die Spannung Ua anliegt. Der durch den Kondensator C1 fließende Strom I1 setzt sich aus dem durch den Kondensator C2 fließenden Blindstrom I2 und dem durch den Motor M über die Gleichrichterbrücke G1 fließenden Wirkstrom Ia zusammen. Dem Kondensator C1 ist ein Schalter S parallel geschaltet.

Beträgt beispielsweise die Eingangsspannung Ue = 220 Volt, die Kapazität des Kondensators C1 = 1,5 uF und die Kapazität des Kondensators C2 = 2,2 uF, was handelsübliche Kapazitäten von Kondensatoren sind, liegt am Verbindungspunkt P der beiden Kondensatoren C1, C2 eine Leerlaufspannung von 89 Volt an, entsprechend dem Wechselstromwiderstandsverhältnis der beiden Kondensatoren, das bekanntlich umgekehrt proportional zum Verhältnis der Kapazitäten ist. Bei diesem Beispiel ist das Verhältnis der Kapazitäten, unter Berücksichtigung der Handelsüblichkeit, so gewählt, daß sich als Verbraucher beispielsweise ein 90 Volt Motor betreiben läßt.

Wenn die Eingangsspannung Ue = 220 V beträgt und die Kapazitäten der beiden Kondensatoren gleich groß sind, liegt am Verbindungs punkt P der beiden Kondensatoren eine Spannung von 110 V an. Diese Spannung liegt in etwa, abzüglich des Durchlaßspannungsabfalles der Dioden der Gleichrichterbrücke G1, auch am Motor M an. Soll das Gerät, das durch den Motor M angetrieben wird, an einem 110 V Wechselspannungsnetz betrieben werden, braucht lediglich der Schalter S geschlossen zu werden.

Fig. 2 zeigt die Abhängigkeit des Blindstroms I2 durch den Kondensator C2 in Abhängigkeit des Wirkstroms Ia durch den Motor M. Bei geöffnetem Schalter S ist der Eingangsstrom Ie = I1 = Ia + j I2. Parameter ist hier das vom Motor M abgegebene Drehmoment Md in cm p. In dem hier dargestellten Beispiel haben die beiden Kondensatoren eine Kapazität von 1,5 uF. Im Leerlauf des Motors (Md = 0) beträgt der Blindstrom I2 durch den Kondensator C2 52 mA und der Wirkstrom Ia durch den Motor 15 mA.

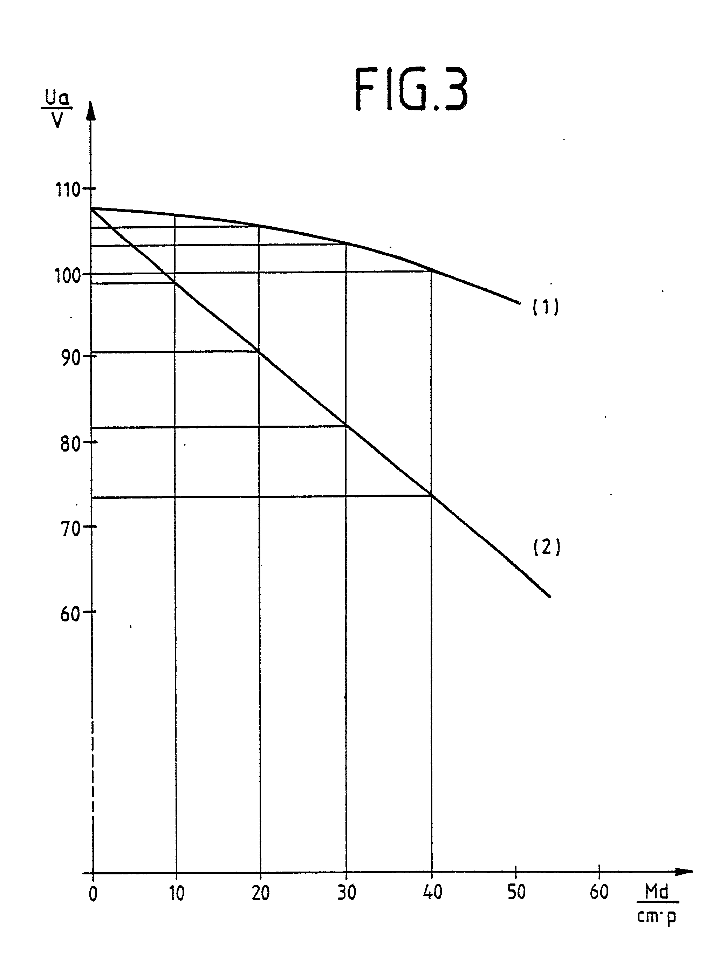

Im Leerlauf des Motors ist also der Blindstrom I2 etwas mehr als 3 mal so groß wie der Wirkstrom Ia. Wenn beispielsweise der Motor so belastet wird, daß er ein Drehmoment von 15 - 20 cm p abgibt, was einer Wirkleistung von ca. 2 Watt entspricht, ist aus der Kurve 1 von Fig. 3 ersichtlich, daß die Spannung Ua am Motor von knapp 110 V kaum abfällt. Eine Vergrößerung der Kapazitäten der Kondensatoren von hier 1,5 uF auf beispielsweise 2,2 uF, und damit eine Vergrößerung des Verhältnisses Blindstrom I2 zu Wirkstrom Ia, ergibt nur noch eine unwesentliche Verbesserung des Spannungsabfalls bei der genannten Belastung, weshalb das Verhältnis von ca. 3:1 von Blindstrom zu Wirkstrom einen guten Kompromiß zwischen Kondensatorgröße und in Kauf zu nehmenden Spannungsabfall bei Belastung darstellt.

Wie aus Fig. 3 weiterhin ersichtlich ist, bleibt auch mit zunehmender Belastung der Spannungsabfall am Motor M vergleichsweise gering (Kurve 1). Dies wird besonders deutlich sichtbar, wenn man die Kurve 1 in Fig. 3, die die Abhängigkeit der Ausgangsspannung Ua vom Motordrehmoment Md bei Verwendung eines erfindungsgemäßen kapazitiven Spannungsteilers zeigt, mit der Kurve 2 vergleicht, welche diese Abhängigkeit bei Verwendung eines bekannten ohmschen Spannungsteilers zeigt. Der dargestellten Kurve 2 liegen ohmsche Widerstände von 2,1 k (anstatt C1) und 2,8 k (anstatt C2) zugrunde. Wie man sieht, fällt die Spannung Ua bei der Kurve 2 bei einer Belastung von 15-20 cm p bereits auf 95-90 V ab. Mit zunehmender Belastung wird der Spannungsabfall der Kurve 2 im Vergleich zur Kurve 1 noch wesentlich größer.

Zusätzlich zu den Vorteilen einer praktisch verlustfreien Spannungsteilung und des sehr kostengünstigen und einfachen Aufbaus hat die erfindungsgemäße Lösung also auch noch den Vorteil der ausgangsseitigen Spannungsstabilisierung bei wechselnder Belastung. Der kostengünstige und platzsparende Aufbau wird noch dadurch unterstützt, daß infolge der Serienschaltung der Kondensatoren diese nur für eine solche Spannungshöhe ausgelegt sein müssen, die infolge der Spannungsteilung an ihnen anliegt. Ein Kondensator, der beispielsweise für 160 Volt Wechselspannungsfestigkeit ausgelegt ist, hat bei gleicher Kapazität nur etwa die halbe Baugröße und ist wesentlich billiger als ein Kondensator, der 250 Volt Wechselspannungsfestigkeit aufweist.

**Ansprüche**

1. Stromversorgungseinrichtung mit einer Gleichrichtungseinrichtung für einen Verbraucher kleiner bis mittlerer Leistung aus einer Wechselspannungsquelle (Ue), dadurch gekennzeichnet, daß zwischen den beiden Polen der Wechselspannungsquelle die Serienschaltung zweier Kondensatoren (C1, C2) angeordnet ist und daß parallel zu dem einen Kondensator (C2) über die aus einer Gleichrichterbrücke in Graetzschaltung (G1) bestehende Gleichrichtungseinrichtung der Verbraucher (M) angeschlossen ist.

2. Stromversorgungseinrichtung nach Anspruch 1, dadurch gekennzeichnet, daß das Verhältnis der Kapazitäten der beiden Kondensatoren (C1, C2) zueinander so bemessen ist, daß die vorgegebene, am Verbraucher (M) anliegende Spannung (Ua) in etwa durch das entsprechende Wechselstromwiderstandsverhältnis der beiden Kondensatoren (C1, C2) erzeugt wird.

3. Stromversorgungseinrichtung nach Anspruch 1, dadurch ekennzeichnet, das die beiden Kondensatoren (C1, C2) die gleiche Kapazität aufweisen.

4. Stromversorgungseinrichtung nach Anspruch 1, 2 oder 3, dadurch ekennzeichnet, daß die Kapazitäten der Kondensatoren (C1, C2) so bemessen sind, daß das Verhältnis des Blindstromes (I2) durch den dem Verbraucher parallel liegenden Kondensator (C2) zu dem Wirkstrom (Ia) durch den Verbraucher größer oder gleich 3:1 ist.

5. Stromversorgungseinrichtung nach Anspruch 3 oder 4, dadurch gekennzeichnet, daß die Wechselspannungsquelle (Ue) ein 220/240 Volt Netz und der Verbraucher ein 110 Volt Gleichstrommotor ist.

6. Stromversorgungseinrichtung nach Anspruch 5, dadurch gekennzeichnet, daß parallel zu dem anderen Kondensator (C1) ein Schalter (S) vorgesehen ist, mit dem dieser andere Kondensator (C1) bei der Versorgung aus einem 110/120 Volt Wechselspannungsnetz kurzgeschlossen werden kann.

# FIG.1

# FIG.2

# FIG.3